# EUROPEAN PATENT APPLICATION

(11) **EP 4 564 947 A1**
(43) Date of publication of application: **04.06.2025**
(21) Application number: 23849215.1
(22) Date of filing: 19.07.2023
(51) Int. Cl.: H04W 64/00

(54) **POSITIONING METHOD AND RELATED PRODUCT**

(30) Priority: 30.07.2022 CN 202210912643
(71) Applicant: Huawei Technologies Co., Ltd., Shenzhen, Guangdong 518129 (CN)
(72) Inventor: MOU, Xin, Shenzhen, Guangdong 518129 (CN); ZHOU, Runze, Shenzhen, Guangdong 518129 (CN)
(74) Representative: Gill Jennings & Every LLP
(86) International application number: PCT/CN2023/108203
(87) International publication number: WO 2024/027507

(57) **Abstract**

This application provides a positioning method and a related product. The method is applied to a positioning service, and is applicable to a communication system of network-assisted sidelink positioning. The method includes: receiving first positioning information, where the first positioning information is used to obtain coordinates of a first UE in a first coordinate system, and the first coordinate system is different from a geocentric coordinate system; performing sidelink (sidelink) positioning measurement with the first UE to obtain a measurement result; and sending second positioning information, where the second positioning information includes the measurement result and coordinates of a second UE in the first coordinate system. In embodiments of this application, the second positioning information including the measurement result and the coordinates of the second UE in the first coordinate system is sent, so that another device can quickly and accurately determine local coordinates of the first UE based on the second positioning information, and the another device can determine the local coordinates of the first UE based on the second positioning information, without performing coordinate transformation.

## Description

This application claims priority to Chinese Patent Application No. 202210912643.8, filed with the China National Intellectual Property Administration on July 30, 2022 and entitled "POSITIONING METHOD AND RELATED PRODUCT", which is incorporated herein by reference in its entirety.

### TECHNICAL FIELD

This application relates to the positioning field, and in particular, to a positioning method and a related product.

### BACKGROUND

With development of 5th generation (5th generation, 5G) technologies, more fields raise a requirement for high-precision positioning. For example, if there are a large quantity of devices in an industrial park, determining a location of each device helps properly allocate resources in the park. In many scenarios, a location representation result based on a local coordinate system is usually easier to understand and use, for example, a coordinate system established with a gate of the park, a center of the park, or another landmark building as the origin of coordinates. Therefore, a solution of how to quickly and accurately determine local coordinates (that is, location information based on the local coordinate system) of a user equipment (user equipment, UE) needs to be studied.

### SUMMARY

Embodiments of this application disclose a positioning method and a related product, so that local coordinates of a UE can be quickly and accurately determined, and coordinate transformation does not need to be performed.

According to a first aspect, an embodiment of this application provides a positioning method. The method is applied to a second UE. The method includes: receiving first positioning information, where the first positioning information is used to obtain coordinates of a first UE in a first coordinate system, and the first coordinate system is different from a geocentric coordinate system; performing sidelink (sidelink) positioning measurement with the first UE to obtain a measurement result; and sending second positioning information, where the second positioning information includes the measurement result and coordinates of the second UE in the first coordinate system.

In this embodiment of this application, the second positioning information including the measurement result and the coordinates of the second UE in the first coordinate system is sent, so that another device can quickly and accurately determine local coordinates of the first UE based on the second positioning information, and the another device can determine the local coordinates of the first UE based on the second positioning information, without performing coordinate transformation.

In a possible implementation, the first positioning information includes first indication information, and the first indication information indicates that the second UE is a reference (reference) UE. For example, the first indication information is reference UE indication=second UE ID. The second UE ID is an ID of the second UE. For example, the first indication information includes only the second UE ID, in other words, an ID included in the first indication information is an ID of the reference UE. For example, the first positioning information includes two UE IDs, one is a first UE ID, that is, an ID of a target UE, and the other is the second UE ID, that is, the ID of the reference UE. In this example, which ID is the target UE ID and which ID is the reference UE ID may be agreed upon in advance, and the first UE ID may be considered as the first indication information. Alternatively, the first indication information indicates that the second UE is used as the reference UE to assist in positioning the first UE. The first indication information may be considered as an assisted positioning indication (assisted positioning indication). A specific form of the first indication information is not limited in embodiments of this application. Optionally, it is agreed upon in advance that after receiving positioning information including the first indication information, a UE is used as the reference UE to assist in positioning the target UE corresponding to the positioning information. For example, positioning information 1 includes a UE 1 ID and the first indication information. The positioning information 1 is used to obtain coordinates of a UE 1 (that is, the target UE) in the first coordinate system. After receiving the positioning information 1, a UE 2 performs sidelink measurement with the UE 1 to obtain a measurement result; and sends positioning information 2 including the measurement result and coordinates of the UE 2 in the first coordinate system.

In this implementation, the first indication information indicates that the second UE is the reference UE, so that the second UE performs sidelink positioning measurement with the first UE based on the first indication information, and sends the second positioning information.

In a possible implementation, the first positioning information further includes identification information of the first UE, for example, a first UE ID (that is, an ID of the first UE).

In this implementation, the first positioning information further includes the identification information of the first UE, so that the second UE determines, based on the first positioning information, to perform sidelink positioning measurement with the first UE.

According to a second aspect, an embodiment of this application provides another positioning method. The method includes: sending first positioning information to a second UE, where the first positioning information is used to obtain coordinates of a first UE in a first coordinate system, and the first coordinate system is different from a geocentric coordinate system; receiving second positioning information, where the second positioning information includes coordinates of the second UE in the first coordinate system and a measurement result obtained by performing, by the second UE, sidelink positioning measurement with the first UE; and determining the coordinates of the first UE in the first coordinate system based on the measurement result and the coordinates of the second UE in the first coordinate system. Optionally, the method is applied to a location management function (location management function, LMF) network element or a network element having a function similar to that of the LMF network element.

In this embodiment of this application, the coordinates of the first UE in the first coordinate system are determined based on the measurement result and the coordinates of the second UE in the first coordinate system in the second positioning information, so that the coordinates of the first UE in the first coordinate system can be quickly and accurately determined, and coordinate transformation does not need to be performed.

In a possible implementation, the first positioning information includes first indication information, and the first indication information indicates that the second UE is a reference UE.

In this implementation, the first indication information indicates that the second UE is the reference UE, so that the second UE performs sidelink positioning measurement with the first UE based on the first indication information, and sends the second positioning information.

In a possible implementation, the first positioning information further includes identification information of the first UE, for example, a first UE ID (that is, an ID of the first UE).

In this implementation, the first positioning information further includes the identification information of the first UE, so that the second UE determines, based on the first positioning information, to perform sidelink positioning measurement with the first UE.

In a possible implementation, the method further includes: receiving a first location request, where the first location request is used to obtain the coordinates of the first UE in the first coordinate system, the first location request includes second indication information, and the second indication information indicates that the second UE is the reference UE. The sending first positioning information to a second UE includes: sending the first positioning information to the second UE based on the first location request.

In this implementation, the first location request is received, so that the first positioning information is sent to the second UE based on the first location request.

In a possible implementation, the method further includes: receiving a first location request, where the first location request is used to obtain the coordinates of the first UE in the first coordinate system, and the first location request includes identification information of the first coordinate system; and using the second UE as a reference UE of the first UE based on the first location request, where the second UE is associated with the first coordinate system.

In this implementation, the second UE is used as the reference UE of the first UE based on the first location request, and it can be determined that the second UE associated with the first coordinate system is used as the reference UE.

In a possible implementation, the using the second UE as a reference UE of the first UE based on the first location request includes: obtaining the identification information of the first coordinate system from the first location request; and selecting, based on a correspondence (for example, a correspondence list) between a coordinate system (coordinate) ID and reference UEs, the second UE from a plurality of reference UEs associated with the first coordinate system as the reference UE of the first UE. The correspondence between a coordinate system and reference UEs includes a correspondence (or an association relationship) between the first coordinate system and the plurality of reference UEs. Optionally, one specific coordinate system (for example, the first coordinate system) ID is associated with a plurality of specific reference UEs, and one reference UE corresponds to only one unique coordinate system ID. The second UE may be understood as a most appropriate reference UE selected for the first UE from the plurality of reference UEs associated with the first coordinate system.

In this implementation, the second UE is selected from the plurality of reference UEs associated with the first coordinate system as the reference UE of the first UE, so that the coordinates of the first UE in the first coordinate system are obtained.

In a possible implementation, the second UE is a reference UE closest to the first UE in the plurality of reference UEs associated with the first coordinate system.

In this implementation, sidelink positioning measurement can be more accurate.

In a possible implementation, the method further includes: sending a first location response, where the first location response includes the coordinates of the first UE in the first coordinate system.

In this implementation, the first location response is sent, so that another device obtains the coordinates of the first UE in the first coordinate system.

According to a third aspect, an embodiment of this application provides another positioning method. The method is applied to a first UE. The method includes: receiving third positioning information, where the third positioning information is used to obtain coordinates of the first UE in a first coordinate system; using a second UE as a reference UE of the first UE based on the third positioning information, where the second UE is associated with the first coordinate system; initiating sidelink positioning measurement to the second UE to obtain a measurement result; and sending fourth positioning information, where the fourth positioning information includes the measurement result and identification information of the second UE.

In this embodiment of this application, the second UE is used as the reference UE of the first UE based on the third positioning information, so that an appropriate second UE may be selected as the reference UE of the first UE, and when a location of the first UE cannot be obtained through air interface positioning measurement, the coordinates of the first UE in the first coordinate system can be determined.

In a possible implementation, the third positioning information includes identification information of the first coordinate system.

In this implementation, the third positioning information includes the identification information of the first coordinate system, so that the first UE can select the second UE associated with the first coordinate system as the reference UE.

In a possible implementation, the using a second UE as a reference UE of the first UE based on the third positioning information includes: triggering a reference UE discovery procedure, and performing reference UE screening by using association with the first coordinate system as one of filtering conditions (or referred to as screening conditions), to complete discovery of the second UE.

In this implementation, the second UE associated with the first coordinate system can be discovered and selected as the reference UE.

According to a fourth aspect, an embodiment of this application provides another positioning method. The method includes: sending third positioning information to a first UE, where the third positioning information is used to obtain coordinates of the first UE in a first coordinate system, and the first coordinate system is different from a geocentric coordinate system; receiving fourth positioning information, where the fourth positioning information includes identification information of a second UE and a measurement result obtained by performing, by the first UE, sidelink positioning measurement on the second UE; sending fifth positioning information to the second UE based on the fourth positioning information, where the fifth positioning information is used to obtain coordinates of the second UE in the first coordinate system; receiving sixth positioning information from the second UE, where the sixth positioning information includes the coordinates of the second UE in the first coordinate system; and obtaining the coordinates of the first UE in the first coordinate system based on the measurement result and the coordinates of the second UE in the first coordinate system. Optionally, the method is applied to an LMF network element or a network element having a function similar to that of the LMF network element.

In this embodiment of this application, the coordinates of the first UE in the first coordinate system are obtained based on the measurement result and the coordinates of the second UE in the first coordinate system, so that the coordinates of the first UE in the first coordinate system can be quickly and accurately determined, and coordinate transformation does not need to be performed.

In a possible implementation, the third positioning information includes identification information of the first coordinate system.

In this implementation, the third positioning information includes the identification information of the first coordinate system, so that the first UE can select the second UE associated with the first coordinate system as the reference UE.

In a possible implementation, the method further includes: sending a first location response, where the first location response includes the coordinates of the first UE in the first coordinate system.

In this implementation, the first location response is sent, so that another device obtains the coordinates of the first UE in the first coordinate system.

According to a fifth aspect, an embodiment of this application provides another positioning method. The method includes: sending a first location request, where the first location request is used to obtain coordinates of a first UE in a first coordinate system, the first coordinate system is different from a geocentric coordinate system, the first location request includes second indication information, and the second indication information indicates that a second UE is used as a reference UE of the first UE; and receiving a first location response, where the first location response includes the coordinates of the first UE in the first coordinate system. Optionally, the method is applied to an access and mobility management function (access and mobility management function, AMF) or a network element having a function similar to that of the AMF. Optionally, the method is applied to a gateway mobile location center (gateway mobile location center, GMLC). Optionally, the method is applied to a location service (location service, LCS) client (client).

In this embodiment of this application, the second indication information in the sent first location request indicates that the second UE is used as the reference UE of the first UE. The second UE is indicated to be used as the reference UE of the first UE, so that operations of discovering or selecting the reference UE can be reduced, thereby reducing positioning time.

In a possible implementation, the first location response further includes third indication information, and the third indication information indicates that the second UE is a reference UE.

In this implementation, the third indication information indicates that the second UE is the reference UE, and it may be learned, based on the third indication information, that the coordinates of the first UE in the first coordinate system are obtained by using the second UE as the reference UE.

According to a sixth aspect, an embodiment of this application provides a communication apparatus. The communication apparatus has a function of implementing a behavior in the method embodiment in the first aspect. The communication apparatus may be a communication device, or may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module. The transceiver module is configured to receive first positioning information, where the first positioning information is used to obtain coordinates of a first UE in a first coordinate system, and the first coordinate system is different from a geocentric coordinate system. The processing module is configured to perform sidelink positioning measurement with the first UE to obtain a measurement result. The transceiver module is further configured to send second positioning information, where the second positioning information includes the measurement result and coordinates of a second UE in the first coordinate system.

In a possible implementation, the first positioning information includes first indication information, and the first indication information indicates that the second UE is a reference UE.

In a possible implementation, the first positioning information further includes identification information of the first UE, for example, a first UE ID (that is, an ID of the first UE).

For technical effects brought by the possible implementations of the sixth aspect, refer to descriptions of the technical effects of the first aspect or the possible implementations of the first aspect.

According to a seventh aspect, an embodiment of this application provides a communication apparatus. The communication apparatus has a function of implementing a behavior in the method embodiment in the second aspect. The communication apparatus may be a communication device, or may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module. The transceiver module is configured to send first positioning information to a second UE, where the first positioning information is used to obtain coordinates of a first UE in a first coordinate system, and the first coordinate system is different from a geocentric coordinate system. The transceiver module is further configured to receive second positioning information, where the second positioning information includes coordinates of the second UE in the first coordinate system and a measurement result obtained by performing, by the second UE, sidelink positioning measurement with the first UE. The processing module is configured to determine the coordinates of the first UE in the first coordinate system based on the measurement result and the coordinates of the second UE in the first coordinate system.

In a possible implementation, the first positioning information includes first indication information, and the first indication information indicates that the second UE is a reference UE.

In a possible implementation, the first positioning information further includes identification information of the first UE, for example, a first UE ID (that is, an ID of the first UE).

In a possible implementation, the transceiver module is further configured to receive a first location request, where the first location request is used to obtain the coordinates of the first UE in the first coordinate system, the first location request includes second indication information, and the second indication information indicates that the second UE is the reference UE.

In a possible implementation, the transceiver module is further configured to receive a first location request, where the first location request is used to obtain the coordinates of the first UE in the first coordinate system, and the first location request includes identification information of the first coordinate system. The processing module is further configured to use the second UE as a reference UE of the first UE based on the first location request, where the second UE is associated with the first coordinate system.

In a possible implementation, the processing module is specifically configured to: obtain the identification information of the first coordinate system from the first location request; and select, based on a correspondence (for example, a correspondence list) between a coordinate system (coordinate) ID and reference UEs, the second UE from a plurality of reference UEs associated with the first coordinate system as the reference UE of the first UE.

In a possible implementation, the second UE is a reference UE closest to the first UE in the plurality of reference UEs associated with the first coordinate system.

In a possible implementation, the transceiver module is further configured to send a first location response, where the first location response includes the coordinates of the first UE in the first coordinate system.

For technical effects brought by the possible implementations of the seventh aspect, refer to descriptions of the technical effects of the second aspect or the possible implementations of the second aspect.

According to an eighth aspect, an embodiment of this application provides a communication apparatus. The communication apparatus has a function of implementing a behavior in the method embodiment in the third aspect. The communication apparatus may be a communication device, or may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module. The transceiver module is configured to receive third positioning information, where the third positioning information is used to obtain coordinates of a first UE in a first coordinate system. The processing module is configured to: use a second UE as a reference UE of the first UE based on the third positioning information, where the second UE is associated with the first coordinate system; and initiate sidelink positioning measurement to the second UE to obtain a measurement result. The transceiver module is further configured to send fourth positioning information, where the fourth positioning information includes the measurement result and identification information of the second UE.

In a possible implementation, the third positioning information includes identification information of the first coordinate system.

In a possible implementation, the processing module is specifically configured to: trigger a reference UE discovery procedure, and perform reference UE screening by using association with the first coordinate system as one of filtering conditions (or referred to as screening conditions), to complete discovery of the second UE.

For technical effects brought by the possible implementations of the eighth aspect, refer to the descriptions of the technical effects of the third aspect or the possible implementations of the third aspect.

According to a ninth aspect, an embodiment of this application provides a communication apparatus. The communication apparatus has a function of implementing a behavior in the method embodiment in the fourth aspect. The communication apparatus may be a communication device, or may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module. The transceiver unit is configured to send third positioning information to a first UE, where the third positioning information is used to obtain coordinates of the first UE in a first coordinate system, and the first coordinate system is different from a geocentric coordinate system. The transceiver unit is further configured to receive fourth positioning information, where the fourth positioning information includes identification information of a second UE and a measurement result obtained by performing, by the first UE, sidelink positioning measurement on the second UE. The transceiver unit is further configured to send fifth positioning information to the second UE based on the fourth positioning information, where the fifth positioning information is used to obtain coordinates of the second UE in the first coordinate system. The transceiver unit is further configured to receive sixth positioning information from the second UE, where the sixth positioning information includes the coordinates of the second UE in the first coordinate system. The processing module is configured to obtain the coordinates of the first UE in the first coordinate system based on the measurement result and the coordinates of the second UE in the first coordinate system.

In a possible implementation, the third positioning information includes identification information of the first coordinate system.

In a possible implementation, the transceiver module is further configured to send a first location response, where the first location response includes the coordinates of the first UE in the first coordinate system.

For technical effects brought by the possible implementations of the ninth aspect, refer to the descriptions of the technical effects of the fourth aspect or the possible implementations of the fourth aspect.

According to a tenth aspect, an embodiment of this application provides a communication apparatus. The communication apparatus has a function of implementing a behavior in the method embodiment in the first aspect. The communication apparatus may be a communication device, or may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module. The processing module is configured to generate a first location request. The transceiver module is configured to send the first location request, where the first location request is used to obtain coordinates of a first UE in a first coordinate system, the first coordinate system is different from a geocentric coordinate system, the first location request includes second indication information, and the second indication information indicates that second UE is used as a reference UE of the first UE. The transceiver module is further configured to receive a first location response, where the first location response includes the coordinates of the first UE in the first coordinate system.

In a possible implementation, the first location response further includes third indication information, and the third indication information indicates that the second UE is a reference UE.

For technical effects brought by the possible implementations of the tenth aspect, refer to the descriptions of the technical effects of the fifth aspect or the possible implementations of the fifth aspect.

According to an eleventh aspect, an embodiment of this application provides another communication apparatus. The communication apparatus includes a processor, the processor is coupled to a memory, and the memory is configured to store a program or instructions. When the program or instructions are executed by the processor, the communication apparatus is enabled to perform the method according to any one of the first aspect to the fifth aspect.

In this embodiment of this application, in a process of performing the method, a process of sending information (or a signal) in the method may be understood as a process of outputting information according to instructions of the processor. When the information is output, the processor outputs the information to a transceiver, so that the transceiver transmits the information. After the information is output by the processor, other processing may need to be performed on the information before the information reaches the transceiver. Similarly, when the processor receives input information, the transceiver receives the information, and inputs the information into the processor. Further, after the transceiver receives the information, other processing may need to be performed on the information before the information is input to the processor.

An operation like sending and/or receiving related to the processor may be generally understood as an instruction output that is based on the processor if there is no special description, or if the operation does not conflict with an actual function or internal logic of the operation in related descriptions.

In an implementation process, the processor may be a processor specially configured to perform these methods, or may be a processor, for example, a general-purpose processor, that executes computer instructions in the memory to perform these methods. For example, the processor may be further configured to execute the program stored in the memory. When the program is executed, the communication apparatus is enabled to perform the method shown in any one of the first aspect or the possible implementations of the first aspect.

In a possible implementation, the memory is located outside the communication apparatus. In a possible implementation, the memory is located inside the communication apparatus.

In a possible implementation, the processor and the memory may alternatively be integrated into one component, in other words, the processor and the memory may alternatively be integrated together.

In a possible implementation, the communication apparatus further includes the transceiver. The transceiver is configured to receive a signal, send a signal, or the like.

According to a twelfth aspect, this application provides another communication apparatus. The communication apparatus includes a processing circuit and an interface circuit. The interface circuit is configured to obtain data or output data. The processing circuit is configured to perform the method shown in any one of the first aspect to the fifth aspect.

According to a thirteenth aspect, this application provides a computer-readable storage medium. The computer-readable storage medium stores a computer program, and the computer program includes program instructions. When the program instructions are executed, a computer is enabled to perform the method shown in any one of the first aspect to the fifth aspect.

According to a fourteenth aspect, this application provides a computer program product. The computer program product includes a computer program, and the computer program includes program instructions. When the program instructions are executed, a computer is enabled to perform the method shown in any one of the first aspect to the fifth aspect.

According to a fifteenth aspect, this application provides a communication system, including the communication apparatus according to any one of the sixth aspect or the possible implementations of the sixth aspect, the communication apparatus according to any one of the seventh aspect or the possible implementations of the seventh aspect, and the communication apparatus according to any one of the tenth aspect or the possible implementations of the tenth aspect.

According to a sixteenth aspect, this application provides a communication system, including the communication apparatus according to any one of the eighth aspect or the possible implementations of the eighth aspect, the communication apparatus according to any one of the ninth aspect or the possible implementations of the ninth aspect, and the communication apparatus according to any one of the tenth aspect or the possible implementations of the tenth aspect.

According to a seventeenth aspect, this application provides a chip, including a processor and a communication interface. The processor reads, through the communication interface, instructions stored in a memory, to perform the method according to any one of the first aspect to the fifth aspect.

### BRIEF DESCRIPTION OF DRAWINGS

To describe the technical solutions in embodiments of this application or in the background more clearly, the following describes the accompanying drawings that need to be used in embodiments of this application or the background.
FIG. 1 is a diagram of network-assisted sidelink positioning;
FIG. 2 shows an example of a reference network architecture for sidelink positioning and a ranging (ranging) service;
FIG. 3 is a diagram of a positioning scenario according to an embodiment of this application;
FIG. 4 is an interactive flowchart of a positioning method according to an embodiment of this application;
FIG. 5 is an interactive flowchart of another positioning method according to an embodiment of this application;
FIG. 6 is an interactive flowchart of another positioning method according to an embodiment of this application;
FIG. 7 is an interactive flowchart of another positioning method according to an embodiment of this application;
FIG. 8 is an interactive flowchart of another positioning method according to an embodiment of this application;
FIG. 9 is a diagram of a structure of a communication apparatus 900 according to an embodiment of this application;
FIG. 10 is a diagram of a structure of another communication apparatus 100 according to an embodiment of this application; and
FIG. 11 is a diagram of a structure of another communication apparatus 110 according to an embodiment of this application.

### DESCRIPTION OF EMBODIMENTS

The terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described herein may be combined with other embodiments.

Terms used in the following embodiments of this application are merely intended to describe specific embodiments, but are not intended to limit this application. The terms "a/an", "one", "said", "the above", "the", and "this" of singular forms used in this specification and the appended claims of this application are also intended to include plural forms, unless otherwise specified in the context clearly. It should also be understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of" used in this application means two or more.

It may be understood that in embodiments of this application, "B corresponding to A" indicates that there is a correspondence between A and B, and B may be determined based on A.

However, it should be further understood that determining (or generating) B according to (or based on) A does not mean that B is determined (or generated) only according to (or based on) A, and B may alternatively be determined (or generated) according to (or based on) A and/or other information.

The following first describes terms and technical solutions in embodiments of this application.

### 1. A ranging-based service and sidelink positioning

Ranging refers to determining a distance between two UEs and/or a direction of one UE (that is, a target UE) to another UE (that is, an observer UE). For example, a distance between two or more UEs is determined through a PC5 interface. In a 3-dimension (3-dimension, 3D) case, directions include a horizontal direction and a vertical direction. Some ranging-based services may need only distance measurement, some may need only direction measurement, and some may need both distance and direction measurement.

The ranging-based service may be used in various vertical fields, such as consumption, smart home, smart city, smart transportation, smart retail, and industry 4.0. Some typical application scenarios are as follows:
(1) Home television control: Based on a distance between a UE and a television reference point, a direction from the television reference point to the UE, and a direction from the UE to the television reference point, a smart television may export a television screen area to which the UE points, so that the smart television may determine a specific location at which a cursor is to be placed and content selected by a user.
(2) Remote access authorization: A person may remotely monitor, by using a UE 1 (for example, a mobile phone) held by the person, a distance between a visitor holding a UE 2 and a door that can be measured, to determine when to unlock the door to allow the visitor to enter.
(3) Museum guide: In a museum, when a person points a painting with a mobile phone, a museum tour server may detect the mobile phone, and then the museum tour server transmits an introduction of the painting to the mobile phone. The museum tour server detects an event by monitoring a distance and a direction from a tourist's mobile phone to a painting.
(4) Immersive sound based on multi-UE ranging: A speaker A, a speaker B, and a speaker C coordinate to provide immersive experience for a person D who is listening to music. To achieve this goal, the speaker A, the speaker B, and the speaker C need to know a range of each other and a range to the person D. When there is non line of sight (non line of sight, NLOS) between the speaker A and the speaker B, the speaker A and the speaker B may derive a range of each other based on a range from the speaker A to the speaker C and a range from the speaker B to the speaker C.
(5) Automatic cooperative driving for short-distance grouping: Cooperative short-distance grouping (CoSdG) refers to a scenario in which a distance between vehicles such as trucks is very short. A group of vehicles are driven with a leading vehicle and are driven by trained professional drivers, and several following vehicles are driven autonomously by a system. The leading vehicle exchanges information with another vehicle, allowing a small distance (longitudinal gap) between the vehicles. This manner is needed for an automotive industry, because lower aerodynamic resistance may lead to higher fuel economy and reduced greenhouse gas emission.

Currently, the 3^{rd} generation partnership project (third generation partnership project, 3GPP) standard has specified function and performance requirements on the ranging-based service, and stipulates that the ranging-based positioning and service may support 5G coverage or may not support 5G coverage, to be specific, various scenarios such as 5G coverage, partial 5G coverage, and out-of-5G coverage. Both a licensed spectrum and an unlicensed spectrum may be used for ranging. A relative positioning requirement for supporting a vehicle to x (vehicle to x, V2X) service (for example, a vehicle platoon) is also specified: (a) A 3GPP system needs to support a relative horizontal location precision of 0.1 m between UEs that support a V2X application. (b) For the UE that supports the V2X application, the 3GPP system needs to support a relative longitudinal location accuracy of less than 0.5 m. In addition, the standard further specifies a use case and a service requirement for sidelink positioning between a UE that supports V2X and a public safety service, and use cases for in-coverage, partial-coverage, and out-of-coverage. In addition, a 5GAA has identified high-precision sidelink positioning as one of main areas of interest, to support advanced use cases, such as autonomous driving, remote driving, and dynamic intersection management.

### 2. Network-assisted sidelink positioning

A positioning service is a service provided by a 5G network. The positioning service provided by the 5G network may be that a base station (base station, a 5G base station is referred to as gNB, or NG-RAN) calculates a location of a UE by measuring a transmit signal of the UE. A positioning technology based on a triangle relationship is a positioning technology that is commonly used currently. The positioning technology based on the triangle relationship may be understood as that three base stations at known locations cooperate to measure the location of the UE.

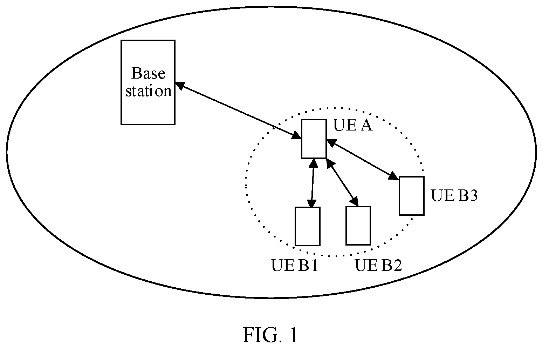

Generally, when an LCS client sends a request for the location of the UE (in other words, a positioning request for the UE), if the UE is in a network coverage area and a quantity of base stations that can measure the UE is enough, the base station may directly perform positioning on the UE by using the foregoing method. This process is referred to as air interface positioning. The LCS client is an entity that interacts with a GMLC to obtain location information of one or more UEs. If the UE is not in the network coverage area or the UE cannot perform measurement on enough base stations in the network coverage area to perform air interface-based positioning, the UE may perform positioning by performing sidelink positioning with a reference UE that can perform air interface positioning to obtain a relative location between the UE and the reference UE. This positioning manner is referred to as network-assisted sidelink positioning. FIG. 1 is a diagram of network-assisted sidelink positioning. As shown in FIG. 1, a UE B1, a UE B2, and a UE B3 cannot communicate with or measure with a base station, but can communicate with or measure with a UE A. The UE A may perform positioning by using the base station. Therefore, locations of the UE B1, the UE B2, and the UE B3 may be calculated through an air interface positioning result of the UE A and sidelink positioning performed by the UE A with the UE B1, the UE B2, and the UE B3. In a solution in which the location of the UE B1 is calculated through the air interface positioning result of the UE A and sidelink positioning of the UE A with the UE B 1, the UE A is a reference UE, and the UE B1 is a target UE. The target UE is a UE to which a positioning request is directed. For example, an LCS client sends a request for a location of a UE, and the UE is a target UE. The reference UE may be understood as a UE that determines a reference plane and a reference direction in a ranging-based service and sidelink positioning. Alternatively, the reference UE may be understood as a UE that assists in locating the target UE.

As described in the background part, in many scenarios, a location representation result based on a local coordinate system is usually easier to understand and use. For example, the local coordinate system is established by using a park gate, a park center, or another landmark building as a coordinate origin. Therefore, a solution of how to quickly and accurately determine coordinates of a UE in a local coordinate system needs to be studied.

Currently, a common solution for determining the coordinates of the UE in the local coordinate system is as follows: After receiving a positioning request carrying a coordinate ID, an LMF network element (which may be referred to as an LMF below) performs air interface positioning measurement on the UE, and performs corresponding coordinate transformation on a positioning measurement result obtained through solving, to finally obtain local coordinates of the UE, to be specific, the coordinates of the UE in the local coordinate system. The coordinate ID is an ID of the local coordinate system. In this solution, determining the local coordinates of the UE by the LMF depends on obtaining a location of the UE through air interface positioning measurement, and a case in which the location of the UE cannot be obtained through air interface positioning measurement is not considered. However, in a scenario in which the UE is not in a network coverage area or the UE cannot perform measurement on enough base stations in the network coverage area to perform air interface positioning, the LMF cannot obtain the location of the UE through air interface positioning measurement. It can be learned that in some scenarios, the local coordinates of the UE cannot be determined by using the foregoing solution. According to a positioning solution provided in this application, local coordinates of a target UE can be determined when a location of the target UE cannot be obtained through air interface positioning measurement.

The following first describes, with reference to the accompanying drawings, an example of a network architecture to which the positioning solution provided in this application is applicable.

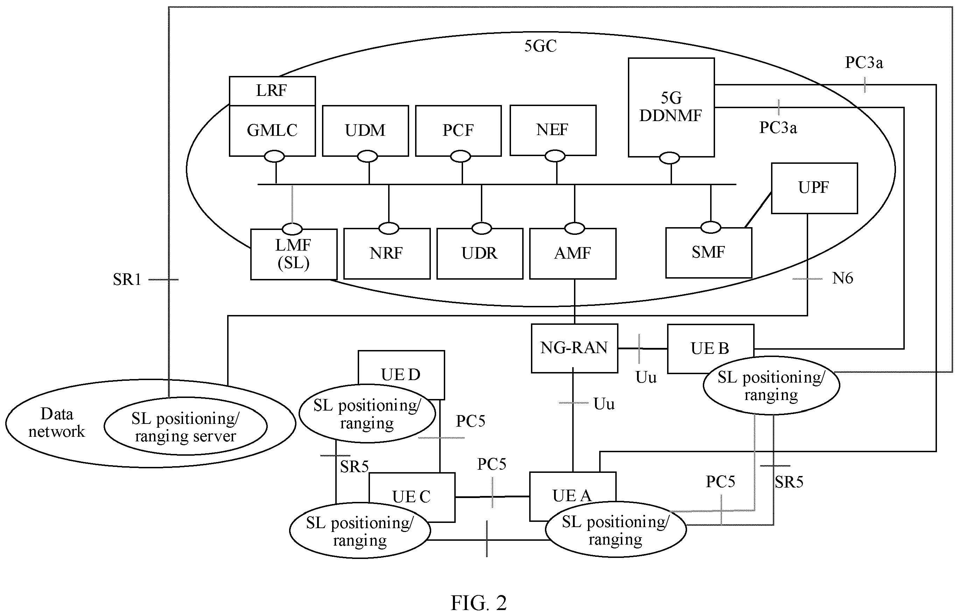

FIG. 2 shows an example of a reference network architecture for sidelink positioning and a ranging (ranging) service. Refer to FIG. 2. A UE A and a UE B are subscribers of a same public land mobile network (public land mobile network, PLMN). The reference architecture also supports a case in which neither the UE A nor the UE B is registered with a network or is not in network coverage. A UE C and a UE D may not be in a network coverage area, or may be partially in network coverage. The network architecture shown in FIG. 2 includes: a location registration function (location registration function, LRF) network element, a unified data management (unified data management, UDM) network element, a policy control function (policy control function, PCF) network element, a session management function (session management function, SMF) network element, a user plane function (user plane function, UPF) network element, a network repository function (network repository function, NRF) network element, a unified data repository (unified data repository, UDR) network element, a 5G direct discovery name management function (5G direct discovery name management function, 5G DDNMF) network element, an access and mobility management function (access and mobility management function, AMF) network element, an LMF network element, a GMLC network element, and a network exposure function (network exposure function, NEF) network element. The LMF network element is the LMF for short, the AMF network element is the AMF for short, and the GMLC network element is the GMLC for short below.

Meanings of functions of some network elements and interfaces in the network architecture shown in FIG. 2 are explained as follows:
UE: a user equipment. In this application, there are two types of UEs: a target UE (for example, a UE 1 below) and a reference UE (for example, a UE 2 below). In this application, the UE may perform device discovery and sidelink positioning measurement.
UDM: The UDM mainly manages and controls user data, for example, manages subscription information; generates a 3GPP authentication credential for the UE; and registers and maintains a network element currently serving the UE.
5G DDNMF: The 5G DDNMF is a logical function that processes a network-related operation needed for dynamic 5G ProSe direct discovery.
AMF: The AMF is responsible for managing a UE context.
LMF: The LMF calculates a location of the UE. In this embodiment of this application, the LMF stores a correspondence list between a coordinate system ID and reference UEs, and may select an appropriate reference UE for the target UE.
GMLC: The GMLC connects the LMF and an LCS client.
NEF: The NEF provides a network function for a third-party application.
PC5: PC5 is a sidelink interface between users.
SR1: SR1 is an interface between a user and a sidelink server. The sidelink server is an SL positioning/ranging measurement server in FIG. 2. The SL positioning/ranging server is translated into the SL positioning/ranging server in English. SL positioning/ranging is translated into SL positioning/ranging in English.
SR5: SR5 is a sidelink interface between users, and works on an upper layer of the PC5.

The foregoing describes only functions of some network elements in the reference network architecture shown in FIG. 2. For definitions of functions of network elements and interfaces in the reference network architecture shown in FIG. 2, refer to related 3GPP specifications. Details are not described herein again. It should be noted that the reference network architecture shown in FIG. 2 is merely an example of a network architecture to which the positioning solution provided in this application is applicable. The positioning solution provided in this application is applicable to any network architecture that can implement sidelink positioning and air interface positioning. A network architecture to which the positioning solution provided in this application is applicable may include more or fewer network elements than the reference network architecture in FIG. 2. FIG. 2 shows a 5G network architecture. The positioning solution provided in this application is applicable to a future 6th generation (6th generation, 6G) network architecture and the like.

The following describes, with reference to the accompanying drawings, an example of a positioning scenario to which the positioning solution provided in this application is applicable.

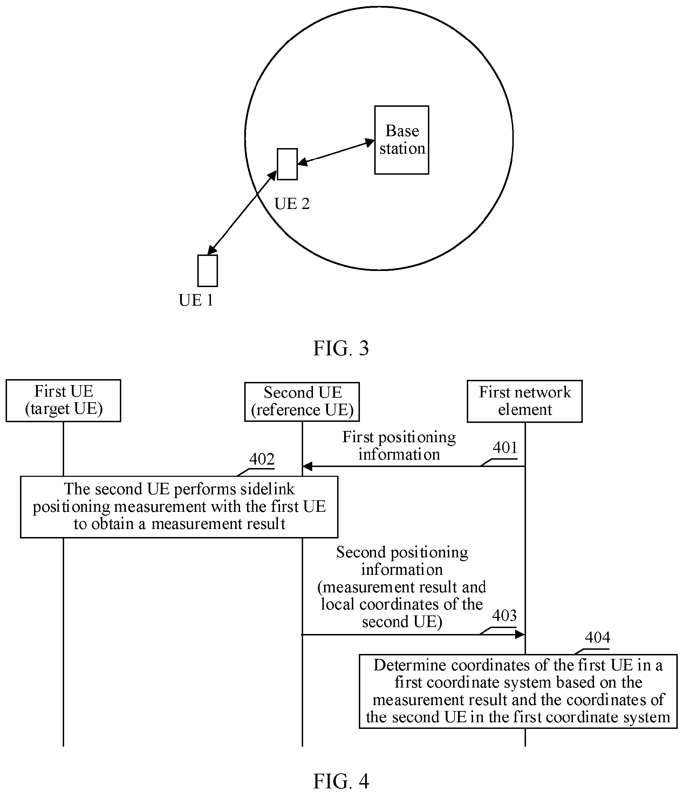

FIG. 3 is a diagram of a positioning scenario according to an embodiment of this application. As shown in FIG. 3, a UE 1 is a target UE, a UE 2 is a reference UE, and the UE 2 is in a network coverage area. A base station may determine a location of the UE 2 through air interface positioning. Local coordinates (or local coordinates) of the UE 1 may be calculated based on a sidelink positioning measurement result between the UE 1 and the UE 2 and local coordinates of the UE 2.

The following describes positioning solutions provided in embodiments of this application with reference to the accompanying drawings.

FIG. 4 is an interactive flowchart of a positioning method according to an embodiment of this application. As shown in FIG. 4, the method includes the following steps.

401: A first network element sends first positioning information to a second UE.

Correspondingly, the second UE receives the first positioning information from the first network element. The first network element may be an LMF, or may be a network element having a function similar to that of the LMF network element. This is not limited in embodiments of this application. The first positioning information is used to obtain coordinates of a first UE in a first coordinate system, and the first coordinate system is different from a geocentric coordinate system. The first coordinate system may be considered as a local coordinate system different from the geocentric coordinate system. For example, the first positioning information is Nlmf_Location_Determinelocation_request.

In a possible implementation, the first positioning information includes first indication information, and the first indication information indicates that the second UE is a reference (reference) UE. The first indication information may be considered as an assisted positioning indication, to be specific, the first indication information indicates that the second UE is the reference (reference) UE to assist in determining the coordinates of the first UE in the first coordinate system. For example, the first indication information is reference UE indication=second UE ID, that is, an ID of the second UE. For example, the first indication information includes only the second UE ID, in other words, an ID included in the first indication information is an ID of the reference UE. For example, the first positioning information includes two UE IDs, one is a first UE ID, that is, an ID of a target UE, and the other is the second UE ID, that is, the ID of the reference UE. In this example, which ID is the target UE ID and which ID is the reference UE ID may be agreed upon in advance, and the first UE ID may be considered as the first indication information. The first indication information may alternatively be in another form. How to indicate that the second UE is the reference UE is not limited in embodiments of this application. In this implementation, the first indication information indicates that the second UE is the reference UE, so that the second UE performs sidelink positioning measurement with the first UE based on the first indication information, and sends second positioning information.

In a possible implementation, the first positioning information further includes identification information of the first UE, for example, the first UE ID (that is, an ID of the first UE). In this implementation, the first positioning information further includes the identification information of the first UE, so that the second UE determines, based on the first positioning information, to perform sidelink positioning measurement with the first UE.

402: The second UE performs sidelink positioning measurement with the first UE to obtain a measurement result.

Optionally, the measurement result obtained by performing, by the second UE, sidelink positioning measurement with the first UE indicates (or represents) a relative location between the second UE and the first UE. The relative location between the second UE and the first UE may include a distance and a direction between the second UE and the first UE.

Optionally, the measurement result obtained by performing, by the second UE, sidelink positioning measurement with the first UE indicates relative coordinates between the second UE and the first UE. For example, the measurement result obtained by performing, by the second UE, sidelink positioning measurement with the first UE is coordinates of the first UE relative to the second UE, to be specific, coordinates of the first UE when coordinates of the second UE are an origin.

403: The second UE sends the second positioning information to the first network element.

The second positioning information includes the measurement result and coordinates of the second UE in the first coordinate system, in other words, local coordinates of the second UE.

404: The first network element determines the coordinates of the first UE in the first coordinate system based on the measurement result and the coordinates of the second UE in the first coordinate system.

A possible implementation of step 404 is as follows: The first network element obtains the relative location between the second UE and the first UE based on the measurement result; and determines the coordinates of the first UE in the first coordinate system based on the relative location and the coordinates of the second UE in the first coordinate system.

A possible implementation of step 404 is as follows: The first network element obtains the relative coordinates between the second UE and the first UE based on the measurement result; and determines the coordinates of the first UE in the first coordinate system based on the relative coordinates and the coordinates of the second UE in the first coordinate system. For example, the first network element learns, based on the measurement result, that when the coordinates of the second UE are the origin, the coordinates of the first UE are (x1, y1); and determines the coordinates (x1+x2, y1+y2) of the first UE in the first coordinate system based on the coordinates (x1, y1) of the first UE and the coordinates (x2, y2) of the second UE in the first coordinate system.

In this embodiment of this application, the second UE sends the second positioning information to the first network element, and the first network element determines the coordinates of the first UE in the first coordinate system based on the measurement result and the coordinates of the second UE in the first coordinate system, so that local coordinates of the first UE can be quickly and accurately determined. The first network element determines the local coordinates of the first UE based on the second positioning information, and does not need to perform coordinate transformation.

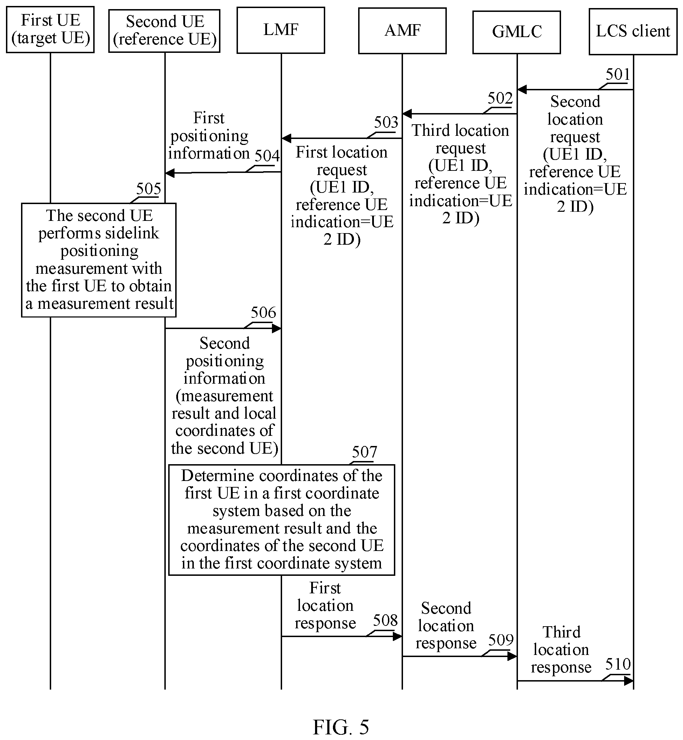

FIG. 5 is an interactive flowchart of another positioning method according to an embodiment of this application. A method procedure in FIG. 5 is a possible implementation of the method described in FIG. 4. In this implementation, an LCS client sends a first location request for a target UE (first UE), and indicates that a second UE is used as a reference UE. An LMF may directly obtain the reference UE and does not need to perform an operation of selecting the reference UE, so that positioning time can be reduced. As shown in FIG. 5, the method includes the following steps.

501: The LCS client sends a second location request to a GMLC.

The second location request is used to obtain coordinates of the first UE in a first coordinate system. The first coordinate system is different from a geocentric coordinate system. The second location request may be considered as a location service request of the first UE (that is, the target UE). The second location request includes second indication information, and the second indication information indicates that the second UE is used as the reference UE of the first UE. The second indication information may be the same as or different from the foregoing first indication information. For example, the second location request is LCS Service Request (UE1 ID, reference UE indication=UE2 ID). UE1 is the first UE, UE2 is the second UE, and reference UE indication=UE2 ID is the second indication information. The first coordinate system is associated with the second UE. That the second location request is used to obtain coordinates of the first UE in a first coordinate system may be understood as: used to obtain the coordinates (or location information) of the first UE in the first coordinate system associated with the second UE. The second UE is associated only with (or corresponds to) the first coordinate system. Therefore, if the second indication information indicates that the second UE is used as the reference UE of the first UE, it may be determined, based on the second indication information, that the second location request is used to obtain the coordinates of the first UE in the first coordinate system.

A possible implementation of step 501 is as follows: The LCS client sends the second location request to the GMLC based on an application layer requirement. For example, the LCS client determines, based on the application layer requirement, that the coordinates of the first UE in the first coordinate system need to be obtained; selects the second UE from a plurality of reference UEs associated with the first coordinate system as the reference UE of the first UE; generates the second location request based on the second UE; and sends the second location request to the GMLC. In this example, the LCS client stores or may obtain a correspondence between the first coordinate system and reference UEs, in other words, a correspondence between the first coordinate system and the plurality of reference UEs. In this example, the LCS client may select, according to a preset rule 1, the second UE from the plurality of reference UEs associated with the first coordinate system as the reference UE of the first UE. The preset rule 1 is not limited in embodiments of this application. For example, the LCS client determines, based on the application layer requirement, that the coordinates of the first UE in the first coordinate system need to be obtained; selects, from a plurality of reference UEs associated with the first UE, the second UE associated with the first coordinate system as the reference UE of the first UE; generates the second location request based on the second UE; and sends the second location request to the GMLC. In this example, the LCS client stores or may obtain a correspondence between the first UE and reference UEs, and a coordinate system associated with the reference UE. In this example, the LCS client may select, according to a preset rule 2 from the plurality of reference UEs associated with the first UE, the second UE associated with the first coordinate system as the reference UE of the first UE. The preset rule 2 is not limited in embodiments of this application.

502: The GMLC sends a third location request to an AMF.

The third location request is used to obtain the coordinates of the first UE in the first coordinate system. The third location request may be considered as a location service request of the first UE (that is, the target UE). The third location request includes second indication information, and the second indication information indicates that the second UE is used as the reference UE of the first UE. For example, the third location request is Namf_Location_ProvidePositioning_Request (UE1 ID, reference UE indication=UE2 ID). UE1 is the first UE, UE2 is the second UE, and reference UE indication=UE2 ID is the second indication information. Before sending the third location request to the AMF, the GMLC may generate the third location request based on the second location request.

503: The AMF sends the first location request to the LMF.

The first location request is used to obtain the coordinates of the first UE in the first coordinate system. The first location request may be considered as a location service request of the first UE (that is, the target UE). The first location request includes second indication information, and the second indication information indicates that the second UE is used as the reference UE of the first UE. For example, the first location request is N1mf_Location_Determinelocation_request (UE1 ID, reference UE indication=UE2 ID). UE1 is the first UE, UE2 is the second UE, and reference UE indication=UE2 ID is the second indication information. Before sending the first location request to the LMF, the AMF may generate the first location request based on the third location request.

504: The LMF sends first positioning information to the second UE.

The LMF is an example of the first network element in FIG. 4. For step 504, refer to step 401.

The first positioning information may be considered as a location request. It should be noted that step 501 to step 504 may be understood as an example in which the LCS client sends a location request to the second UE. Step 501 to step 504 may be replaced with other steps, provided that a technical objective of sending the location request to the second UE can be achieved. It should be understood that step 501 to step 504 are an example in which the LCS client sends the location request to the second UE in a 5G network architecture. In another network architecture (for example, a 6G network architecture), a procedure in which the LCS client sends the location request to the second UE may be different from the procedure in FIG. 5.

505: The second UE performs sidelink positioning measurement with the first UE to obtain a measurement result.

For step 505, refer to step 402.

506: The second UE sends second positioning information to the LMF.

For step 506, refer to step 403.

507: The LMF determines the coordinates of the first UE in the first coordinate system based on the measurement result and coordinates of the second UE in the first coordinate system.

For step 507, refer to step 404.

508: The LMF sends a first location response to the AMF.

The first location response includes the coordinates of the first UE in the first coordinate system. For example, the first location response is N1mf_Location_Determinelocation_response (UE1 location=x, y, z, xyz unit reference UE=UE2 ID). The coordinates (x, y, z) represent the coordinates of the first UE in the first coordinate system, xyz unit represents a unit of x, y, and z coordinates, for example, meter, and reference UE=UE2 ID indicates that the coordinates (x, y, z) are obtained by using the UE 2 (that is, the second UE) as the reference UE.

509: The AMF sends a second location response to the GMLC.

The second location response includes the coordinates of the first UE in the first coordinate system. For example, the second location response is Namf_Location_ProvidePositioning_Response (UE1 location=x, y, z, xyz unit reference UE=UE2 ID). The coordinates (x, y, z) represent the coordinates of the first UE in the first coordinate system, xyz unit represents a unit of x, y, and z coordinates, for example, meter, and reference UE=UE2 ID indicates that the coordinates (x, y, z) are obtained by using the UE 2 (that is, the second UE) as the reference UE.

510: The GMLC sends a third location response to the LCS client.

The third location response includes the coordinates of the first UE in the first coordinate system. For example, the third location response is LCS Service Request (UE1 location=x, y, z, xyz unit reference UE=UE2 ID). The coordinates (x, y, z) represent the coordinates of the first UE in the first coordinate system, xyz unit represents a unit of x, y, and z coordinates, for example, meter, and reference UE=UE2 ID indicates that the coordinates (x, y, z) are obtained by using the UE 2 (that is, the second UE) as the reference UE.

It should be noted that step 508 to step 510 may be understood as an example in which the LMF sends a location response to the LCS client. Step 508 to step 510 may be replaced with other steps, provided that a technical objective of sending the location response to the LCS client can be achieved. It should be understood that step 508 to step 510 are an example in which the LMF sends the location response to the LCS client in a 5G network architecture. In another network architecture (for example, a 6G network architecture), a procedure in which the LMF sends the location response to the LCS client may be different from the procedure in FIG. 5.

In this embodiment of this application, the LCS client sends the first location request for the target UE (the first UE), and indicates that the second UE is used as the reference UE. The LMF may directly obtain the reference UE and does not need to perform an operation of selecting the reference UE, so that positioning time can be reduced.

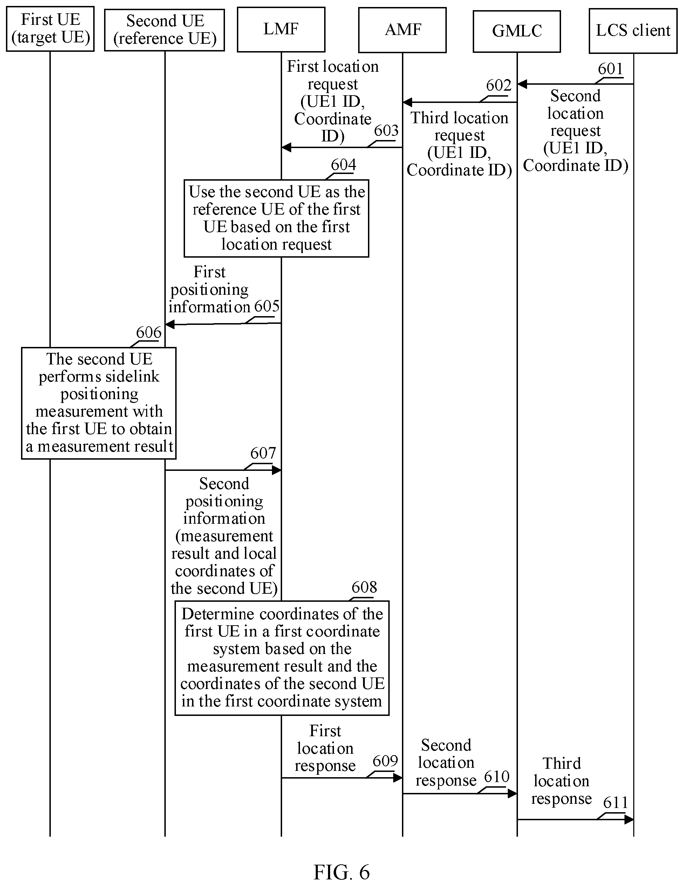

FIG. 6 is an interactive flowchart of another positioning method according to an embodiment of this application. A method procedure in FIG. 6 is a possible implementation of the method described in FIG. 4. In this implementation, an LMF selects a most appropriate reference UE for a first UE (that is, a target UE), and notifies the reference UE to perform sidelink measurement on the target UE. The LMF directly calculates local coordinates of the first UE based on a sidelink measurement result and local coordinates reported by a second UE. This can resolve a problem that a location of the first UE cannot be obtained through air interface positioning measurement. As shown in FIG. 6, the method includes the following steps.

601: An LCS client sends a second location request to a GMLC.

The second location request is used to obtain coordinates of the first UE in a first coordinate system. The second location request may be considered as a location service request of the first UE (that is, the target UE).

In a possible implementation, the second location request includes identification information of the first coordinate system. For example, the second location request includes an ID of the first coordinate system. For example, the second location request is LCS Service Request (UE1 ID, Coordinate ID). UE1 is the first UE, and Coordinate ID is an ID of the first coordinate system. In this implementation, the second location request includes the identification information of the first coordinate system, and can accurately indicate the first coordinate system.

In a possible implementation, the LCS client is associated with the first coordinate system. Each LCS client may agree upon, during subscription, that required location coordinates are based on a specific coordinate system. In this case, the LCS client may not include Coordinate ID in a location request. The LCS client sends only a location request for the first UE, and a network (for example, the GMLC) identifies a corresponding coordinate system based on an identity of the LCS client. For example, the second location request is LCS Service Request (UE1 ID).

602: The GMLC sends a third location request to an AMF.

The third location request is used to obtain the coordinates of the first UE in the first coordinate system. The third location request may be considered as a location service request of the first UE (that is, the target UE). Before sending the third location request to the AMF, the GMLC may generate the third location request based on the second location request.

In a possible implementation, the third location request includes identification information of the first coordinate system. For example, the third location request includes an ID of the first coordinate system. For example, the third location request is Namf_Location_ProvidePositioning_Request (UE1 ID, Coordinate ID). UE1 is the first UE, and Coordinate ID is an ID of the first coordinate system.

In a possible implementation, the second location request does not include the identification information of the first coordinate system, and the LCS client is associated with the first coordinate system. The GMLC identifies, based on subscription data of the LCS client, Coordinate ID corresponding to the LCS client, and generates the third location request including Coordinate ID. In this implementation, the second location request does not include the identification information of the first coordinate system, and may occupy bytes.

603: The AMF sends a first location request to the LMF.

The first location request is used to obtain the coordinates of the first UE in the first coordinate system. The first location request may be considered as a location service request of the first UE (that is, the target UE). The first location request includes identification information of the first coordinate system. For example, the first location request includes an ID of the first coordinate system. For example, the first location request is N1mf_Location_Determinelocation_request (UE1 ID, Coordinate ID). UE1 is the first UE, and Coordinate ID is an ID of the first coordinate system. Before sending the first location request to the LMF, the AMF may generate the first location request based on the third location request.

It should be noted that step 601 to step 603 may be understood as an example in which the LCS client sends a location request to the LMF. Step 601 to step 603 may be replaced with other steps, provided that a technical objective of sending the location request to the second UE can be achieved. It should be understood that step 601 to step 603 are an example in which the LCS client sends the location request to the LMF in a 5G network architecture. In another network architecture (for example, a 6G network architecture), a procedure in which the LCS client sends the location request to the LMF may be different from the procedure in FIG. 6.

604: The LMF uses the second UE as the reference UE of the first UE based on the first location request.

In a possible implementation, the LMF obtains the identification information of the first coordinate system from the first location request; and selects, based on a correspondence (for example, a correspondence list) between a coordinate system (coordinate) ID and reference UEs, the second UE from a plurality of reference UEs associated with the first coordinate system as the reference UE of the first UE. The correspondence between a coordinate system and reference UEs includes a correspondence (or an association relationship) between the first coordinate system and the plurality of reference UEs. Optionally, one specific coordinate system (for example, the first coordinate system) ID is associated with a plurality of specific reference UEs, and one reference UE corresponds to only one unique coordinate system ID. The second UE may be understood as the most appropriate reference UE selected for the first UE from the plurality of reference UEs associated with the first coordinate system.

605: The LMF sends first positioning information to the second UE.

The LMF is an example of the first network element in FIG. 4. For step 605, refer to step 401.

606: The second UE performs sidelink positioning measurement with the first UE to obtain a measurement result.

For step 506, refer to step 402.

607: The second UE sends second positioning information to the LMF.

For step 607, refer to step 403.

608: The LMF determines the coordinates of the first UE in the first coordinate system based on the measurement result and coordinates of the second UE in the first coordinate system.

For step 608, refer to step 404.

609: The LMF sends a first location response to the AMF.

For step 609, refer to step 508.

610: The AMF sends a second location response to the GMLC.

For step 610, refer to step 509.

611: The GMLC sends a third location response to the LCS client.

For step 611, refer to step 510.

It should be noted that step 609 to step 611 may be understood as an example in which the LMF sends a location response to the LCS client. Step 609 to step 611 may be replaced with other steps, provided that a technical objective of sending the location response to the LCS client can be achieved. It should be understood that step 609 to step 611 are an example in which the LMF sends the location response to the LCS client in a 5G network architecture. In another network architecture (for example, a 6G network architecture), a procedure in which the LMF sends the location response to the LCS client may be different from the procedure in FIG. 6.

In this embodiment of this application, the LMF selects the most appropriate reference UE for the first UE (that is, the target UE), and notifies the reference UE to perform sidelink measurement on the target UE. The LMF directly calculates the local coordinates of the first UE, in other words, the coordinates of the first UE in the first coordinate system, based on the sidelink measurement result and the local coordinates reported by the second UE. This can resolve a problem that the location of the first UE cannot be obtained through air interface positioning measurement.

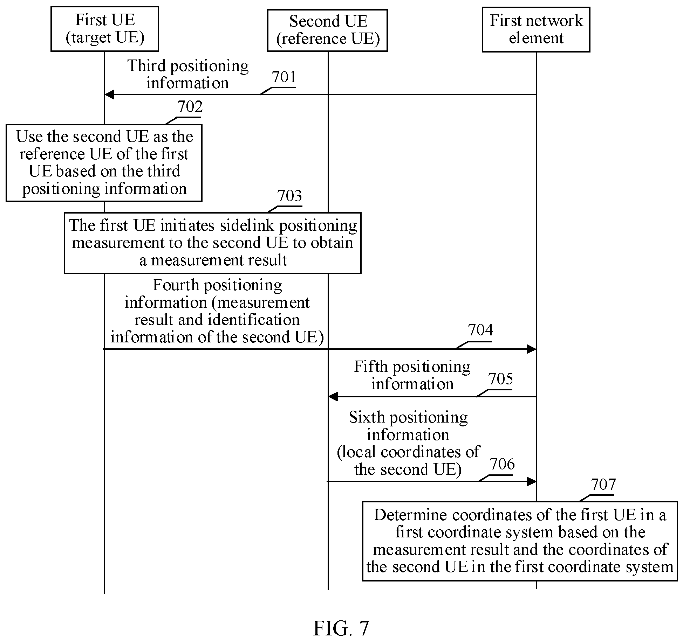

FIG. 7 is an interactive flowchart of another positioning method according to an embodiment of this application. A main difference between the positioning method in FIG. 7 and the positioning method in FIG. 4 lies in that a first UE (that is, a target UE) and a second UE (that is, a reference UE) perform different operations. As shown in FIG. 7, the method includes the following steps.

701: A first network element sends third positioning information to the first UE.

Correspondingly, the first UE receives the third positioning information from the first network element. The third positioning information is used to obtain coordinates of the first UE in a first coordinate system. The first coordinate system is different from a geocentric coordinate system.

In a possible implementation, the third positioning information includes identification information of the first coordinate system. The third positioning information may be a downlink positioning message including Coordinate ID (that is, an ID of the first coordinate system), and the third positioning information indicates the first UE to search for the reference UE to perform assisted positioning. In this implementation, the third positioning information includes the identification information of the first coordinate system, so that the first UE can select the second UE associated with the first coordinate system as the reference UE.

702: The first UE uses the second UE as the reference UE of the first UE based on the third positioning information.

The second UE is associated with the first coordinate system.

A possible implementation of step 702 is as follows: triggering a reference UE discovery procedure, and performing reference UE screening by using association with the first coordinate system as one of filtering conditions (or referred to as screening conditions), to complete discovery of the second UE. Optionally, in an entire network, each reference UE has a corresponding coordinate system, and a location of the reference UE is represented only in the specific coordinate system. The first UE performs reference UE screening by using Coordinate ID as one of conditions.

703: The first UE initiates sidelink positioning measurement to the second UE to obtain a measurement result.

704: The first UE sends fourth positioning information to the first network element.

The fourth positioning information includes the measurement result and identification information of the second UE.

705: The first network element sends fifth positioning information to the second UE based on the fourth positioning information.

Correspondingly, the second UE receives the fifth positioning information from the first network element. The fifth positioning information is used to obtain coordinates of the second UE in the first coordinate system. In other words, the fifth positioning information is used to obtain local coordinates of the second UE.

A possible implementation of step 705 is as follows: The first network element obtains the measurement result and the identification information of the second UE based on the fourth positioning information, for example, a second UE ID; and sends the fifth positioning information to the second UE. In this implementation, the first network element obtains the identification information of the second UE based on the fourth positioning information, and then sends the fifth positioning information to the second UE.

706: The second UE sends sixth positioning information to the first network element.

Correspondingly, the first network element receives the sixth positioning information from the second UE. The sixth positioning information includes the coordinates of the second UE in the first coordinate system, in other words, the local coordinates of the second UE.

707: The first network element determines the coordinates of the first UE in the first coordinate system based on the measurement result and the coordinates of the second UE in the first coordinate system.

In this embodiment of this application, the first UE uses the second UE as the reference UE of the first UE based on the third positioning information; may select an appropriate second UE as the reference UE of the first UE; and can determine the coordinates of the first UE in the first coordinate system when a location of the first UE cannot be obtained through air interface positioning measurement.

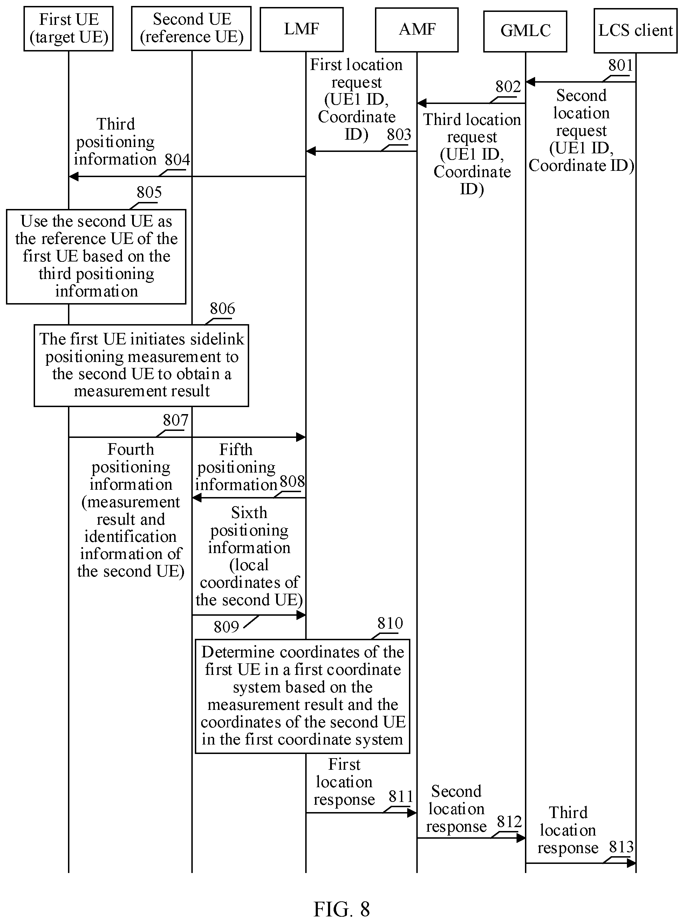

FIG. 8 is an interactive flowchart of another positioning method according to an embodiment of this application. A method procedure in FIG. 8 is a possible implementation of the method described in FIG. 7. In this implementation, a first UE (that is, a target UE) searches for (or discovers) a reference UE to perform assisted positioning, to determine coordinates of the first UE in a first coordinate system. This can resolve a problem that a location of the first UE cannot be obtained through air interface positioning measurement. As shown in FIG. 8, the method includes the following steps.

801: An LCS client sends a second location request to a GMLC.

The second location request is used to obtain the coordinates of the first UE in the first coordinate system. The second location request may be considered as a location service request of the first UE (that is, the target UE). For step 801, refer to step 601.

802: The GMLC sends a third location request to an AMF.

The third location request is used to obtain the coordinates of the first UE in the first coordinate system. The third location request may be considered as a location service request of the first UE (that is, the target UE). Before sending the third location request to the AMF, the GMLC may generate the third location request based on the second location request. For step 802, refer to step 602.

803: The AMF sends a first location request to an LMF.

The first location request is used to obtain the coordinates of the first UE in the first coordinate system. The first location request includes identification information of the first coordinate system. For step 803, refer to step 603.

It should be noted that step 801 to step 803 may be understood as an example in which the LCS client sends a location request to the LMF. Step 801 to step 803 may be replaced with other steps, provided that a technical objective of sending the location request to a second UE can be achieved. It should be understood that step 801 to step 803 are an example in which the LCS client sends the location request to the LMF in a 5G network architecture. In another network architecture (for example, a 6G network architecture), a procedure in which the LCS client sends the location request to the LMF may be different from the procedure in FIG. 8.

804: The LMF sends third positioning information to the first UE.

The LMF is an example of the first network element in FIG. 7. For step 804, refer to step 701.

805: The first UE uses the second UE as the reference UE of the first UE based on the third positioning information.

For step 805, refer to step 702.

806: The first UE initiates sidelink positioning measurement to the second UE to obtain a measurement result.

For step 806, refer to step 703.

807: The first UE sends fourth positioning information to the LMF.

For step 807, refer to step 704.

808: The LMF sends fifth positioning information to the second UE based on the fourth positioning information.

For step 808, refer to step 705.

809: The second UE sends sixth positioning information to the LMF.

For step 809, refer to step 706.

810: The LMF determines the coordinates of the first UE in the first coordinate system based on the measurement result and coordinates of the second UE in the first coordinate system.

For step 810, refer to step 707.

811: The LMF sends a first location response to the AMF.

For step 811, refer to step 508.

812: The AMF sends a second location response to the GMLC.

For step 812, refer to step 509.

813: The GMLC sends a third location response to the LCS client.

For step 813, refer to step 510.

It should be noted that step 811 to step 813 may be understood as an example in which the LMF sends a location response to the LCS client. Step 811 to step 813 may be replaced with other steps, provided that a technical objective of sending the location response to the LCS client can be achieved. It should be understood that step 811 to step 813 are an example in which the LMF sends the location response to the LCS client in a 5G network architecture. In another network architecture (for example, a 6G network architecture), a procedure in which the LMF sends the location response to the LCS client may be different from the procedure in FIG. 8.

In this embodiment of this application, the first UE (that is, the target UE) searches for (or discovers) the reference UE to perform assisted positioning, and sends, to the LMF, the measurement result of sidelink positioning performed with the second UE. The LMF determines the coordinates of the first UE in the first coordinate system based on the measurement result and the coordinates of the second UE in the first coordinate system. This can resolve a problem that the location of the first UE cannot be obtained through air interface positioning measurement.

The foregoing describes the communication methods provided in embodiments of this application. The following describes, with reference to the accompanying drawings, structures of communication apparatuses that can implement the communication methods provided in embodiments of this application.

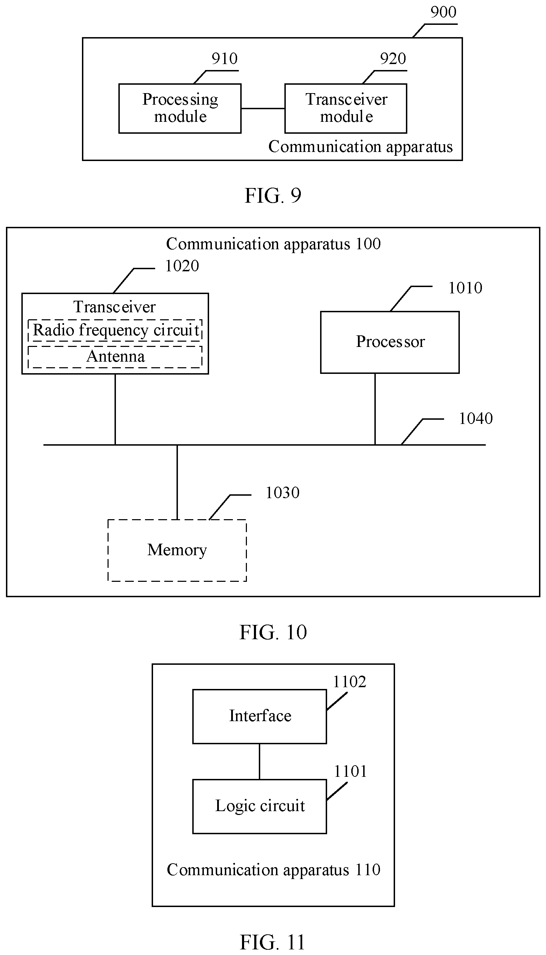

FIG. 9 is a diagram of a structure of a communication apparatus 900 according to an embodiment of this application. The communication apparatus 900 may implement a function or a step implemented by the second UE in the foregoing method embodiments, or may implement a function or a step implemented by the first UE in the foregoing method embodiments, or may implement a function or a step implemented by the first network element in the foregoing method embodiments, or may implement a function or a step implemented by the AMF in the foregoing method embodiments, or may implement a function or a step implemented by the GMLC in the foregoing method embodiments, or may implement a function or a step implemented by the LCS client in the foregoing method embodiments. The communication apparatus may include a processing module 910 and a transceiver module 920. Optionally, the communication apparatus may further include a storage unit. The storage unit may be configured to store instructions (code or a program) and/or data. The processing module 910 and the transceiver module 920 may be coupled to the storage unit. For example, the processing module 910 may read the instructions (the code or the program) and/or the data in the storage unit, to implement a corresponding method. The foregoing units may be disposed independently, or may be partially or completely integrated. For example, the transceiver module 920 may further include a sending module and a receiving module. The sending module may be a transmitter, and the receiving module may be a receiver. An entity corresponding to the transceiver module 920 may be a transceiver, or may be a communication interface.

In some possible implementations, the communication apparatus 900 can correspondingly implement a behavior and a function of the second UE in the foregoing method embodiments. For example, the communication apparatus 900 may be the second UE, or may be a component (for example, a chip or a circuit) used in the second UE. For example, the transceiver module 920 may be configured to perform all receiving or sending operations performed by the second UE in the embodiments shown in FIG. 4 to FIG. 8, for example, step 401 and step 403 in the embodiment shown in FIG. 4, step 504 and step 506 in the embodiment shown in FIG. 5, step 605 and step 607 in the embodiment shown in FIG. 6, step 705 and step 706 in the embodiment shown in FIG. 7, step 808 and step 809 in the embodiment shown in FIG. 8, and/or another process used to support the technology described in this specification. The processing module 910 is configured to perform all operations performed by the second UE in the embodiments shown in FIG. 4 to FIG. 8 other than sending and receiving operations, for example, step 402 in the embodiment shown in FIG. 4, step 505 in the embodiment shown in FIG. 5, step 606 in the embodiment shown in FIG. 6, step 703 in the embodiment shown in FIG. 7, and step 806 in the embodiment shown in FIG. 8.

In some possible implementations, the communication apparatus 900 can correspondingly implement a behavior and a function of the first UE in the foregoing method embodiments. For example, the communication apparatus 900 may be the first UE, or may be a component (for example, a chip or a circuit) used in the first UE. For example, the transceiver module 920 may be configured to perform all receiving or sending operations performed by the first UE in the embodiments shown in FIG. 7 to FIG. 8, for example, step 701 and step 704 in the embodiment shown in FIG. 7, step 804 and step 807 in the embodiment shown in FIG. 8, and/or another process used to support the technology described in this specification. The processing module 910 is configured to perform all operations performed by the first UE other than sending and receiving operations, for example, step 402 in the embodiment shown in FIG. 4, step 505 in the embodiment shown in FIG. 5, step 606 in the embodiment shown in FIG. 6, step 702 and step 703 in the embodiment shown in FIG. 7, and step 805 and step 806 in the embodiment shown in FIG. 8.

In some possible implementations, the communication apparatus 900 can correspondingly implement a behavior and a function of the first network element in the foregoing method embodiments. For example, the communication apparatus 900 may be the first network element, or may be a component (for example, a chip or a circuit) used in the first network element. For example, the transceiver module 920 may be configured to perform all receiving or sending operations performed by the first network element in the embodiments shown in FIG. 4 to FIG. 8, for example, step 401 and step 403 in the embodiment shown in FIG. 4, step 503, step 504, step 506, and step 508 in the embodiment shown in FIG. 5, step 603, step 605, step 607, and step 609 in the embodiment shown in FIG. 6, step 701, step 704, step 705, and step 706 in the embodiment shown in FIG. 7, and/or another process used to support the technology described in this specification. The processing module 910 is configured to perform all operations performed by the first network element other than sending and receiving operations, for example, step 404 in the embodiment shown in FIG. 4, step 507 in the embodiment shown in FIG. 5, step 604 and step 608 in the embodiment shown in FIG. 6, step 707 in the embodiment shown in FIG. 7, and step 810 in the embodiment shown in FIG. 8.

In some possible implementations, the communication apparatus 900 can correspondingly implement a behavior and a function of the GMLC in the foregoing method embodiments. For example, the communication apparatus 900 may be the GMLC, or may be a component (for example, a chip or a circuit) used in the GMLC. For example, the transceiver module 920 may be configured to perform all receiving or sending operations performed by the GMLC in the embodiments in FIG. 5, FIG. 6, and FIG. 8, and/or another process used to support the technology described in this specification. For example, the processing module 910 is configured to perform all operations performed by the GMLC in FIG. 5, FIG. 6, and FIG. 8 other than sending and receiving operations.

In some possible implementations, the communication apparatus 900 can correspondingly implement a behavior and a function of the LCS client in the foregoing method embodiments. For example, the communication apparatus 900 may be the LCS client, or may be a component (for example, a chip or a circuit) used in the LCS client. For example, the transceiver module 920 may be configured to perform all receiving or sending operations performed by the LCS client in the embodiments in FIG. 5, FIG. 6, and FIG. 8, and/or another process used to support the technology described in this specification. For example, the processing module 910 is configured to perform all operations performed by the LCS client in FIG. 5, FIG. 6, and FIG. 8 other than sending and receiving operations.

In some possible implementations, the communication apparatus 900 can correspondingly implement a behavior and a function of the AMF in the foregoing method embodiments. For example, the communication apparatus 900 may be the AMF, or may be a component (for example, a chip or a circuit) used in the AMF. For example, the transceiver module 920 may be configured to perform all receiving or sending operations performed by the first UE in the embodiments in FIG. 5, FIG. 6, and FIG. 8, and/or another process used to support the technology described in this specification. For example, the processing module 910 is configured to perform all operations performed by the AMF in FIG. 5, FIG. 6, and FIG. 8 other than sending and receiving operations.

FIG. 10 is a diagram of a structure of another communication apparatus 100 according to an embodiment of this application. The communication apparatus in FIG. 10 may be the second UE, the first UE, the first network element, the AMF, the GMLC, or the LCS client.

As shown in FIG. 10, the communication apparatus 100 includes at least one processor 1010 and one transceiver 1020.

In some embodiments of this application, the processor 1010 and the transceiver 1020 may be configured to perform a function, an operation, or the like performed by the second UE. For example, the transceiver 1020 performs all receiving or sending operations performed by the second UE in the embodiments in FIG. 4 to FIG. 8. For example, the processor 1010 is configured to perform all operations performed by the second UE in the embodiments in FIG. 4 to FIG. 8 other than sending and receiving operations.

In some embodiments of this application, the processor 1010 and the transceiver 1020 may be configured to perform a function, an operation, or the like performed by the first UE. For example, the transceiver 1020 performs all receiving or sending operations performed by the first UE in the embodiments in FIG. 4 to FIG. 8. For example, the processor 1010 is configured to perform all operations performed by the first UE in the embodiments in FIG. 4 to FIG. 8 other than sending and receiving operations.

In some embodiments of this application, the processor 1010 and the transceiver 1020 may be configured to perform a function, an operation, or the like performed by the first network element. For example, the transceiver 1020 performs all receiving or sending operations performed by the first network element in the embodiments in FIG. 4 to FIG. 8. For example, the processor 1010 is configured to perform all operations performed by the first network element in the embodiments in FIG. 4 to FIG. 8 other than sending and receiving operations.

In some embodiments of this application, the processor 1010 and the transceiver 1020 may be configured to perform a function, an operation, or the like performed by the AMF. For example, the transceiver 1020 performs all receiving or sending operations performed by the AMF in the embodiments in FIG. 5, FIG. 6, and FIG. 8. For example, the processor 1010 is configured to perform all operations performed by the AMF in the embodiments in FIG. 5, FIG. 6, and FIG. 8 other than sending and receiving operations.

In some embodiments of this application, the processor 1010 and the transceiver 1020 may be configured to perform a function, an operation, or the like performed by the GMLC. For example, the transceiver 1020 performs all receiving or sending operations performed by the GMLC in the embodiments in FIG. 5, FIG. 6, and FIG. 8. For example, the processor 1010 is configured to perform all operations performed by the GMLC in the embodiments in FIG. 5, FIG. 6, and FIG. 8 other than sending and receiving operations.

In some embodiments of this application, the processor 1010 and the transceiver 1020 may be configured to perform a function, an operation, or the like performed by the LCS client. For example, the transceiver 1020 performs all receiving or sending operations performed by the LCS client in the embodiments in FIG. 5, FIG. 6, and FIG. 8. For example, the processor 1010 is configured to perform all operations performed by the LCS client in the embodiments in FIG. 5, FIG. 6, and FIG. 8 other than sending and receiving operations.

The transceiver 1020 is configured to communicate with another device/apparatus through a transmission medium. The processor 1010 receives and sends data and/or signaling by using the transceiver 1020, and is configured to implement the method in the foregoing method embodiments. The processor 1010 may implement the functions of the processing module 910, and the transceiver 1020 may implement the functions of the transceiver module 920.

Optionally, the transceiver 1020 may include a radio frequency circuit and an antenna. The radio frequency circuit is mainly configured to perform conversion between a baseband signal and a radio frequency signal, and process the radio frequency signal. The antenna is mainly configured to receive and send a radio frequency signal in a form of an electromagnetic wave. An input/output apparatus, such as a touchscreen, a display, or a keyboard, is mainly configured to receive data input by a user and output data to the user.

Optionally, the communication apparatus 100 may further include at least one memory 1030, configured to store program instructions and/or data. The memory 1030 is coupled to the processor 1010. The coupling in this embodiment of this application may be an indirect coupling or a communication connection between apparatuses, units, or modules in an electrical form, a mechanical form, or another form, and is used for information exchange between the apparatuses, the units, or the modules. The processor 1010 may cooperate with the memory 1030. The processor 1010 may execute the program instructions stored in the memory 1030. At least one of the at least one memory may be included in the processor.

After the communication apparatus 100 is powered on, the processor 1010 may read a software program in the memory 1030, interpret and execute instructions of the software program, and process data of the software program. When data needs to be sent wirelessly, the processor 1010 performs baseband processing on to-be-sent data, and then outputs a baseband signal to the radio frequency circuit. The radio frequency circuit performs radio frequency processing on the baseband signal, and then sends out a radio frequency signal through the antenna in a form of an electromagnetic wave. When data is sent to the communication apparatus, the radio frequency circuit receives the radio frequency signal through the antenna, converts the radio frequency signal into a baseband signal, and outputs the baseband signal to the processor 1010. The processor 1010 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In this embodiment of this application, a specific connection medium between the transceiver 1020, the processor 1010, and the memory 1030 is not limited. In this embodiment of this application, the memory 1030, the processor 1010, and the transceiver 1020 are connected through a bus 1040 in FIG. 10. The bus is represented by a bold line in FIG. 10. A connection manner between other components is merely an example for description, and is not limited thereto. The bus may include an address bus, a data bus, a control bus, and the like. For ease of representation, only one bold line is used to represent the bus in FIG. 10, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the methods disclosed with reference to embodiments of this application may be directly performed and completed by using a hardware processor, or may be performed and completed by using a combination of hardware and software modules in the processor.

FIG. 11 is a diagram of a structure of another communication apparatus 110 according to an embodiment of this application. As shown in FIG. 11, the communication apparatus shown in FIG. 11 includes a logic circuit 1101 and an interface 1102. The processing module 910 in FIG. 11 may be implemented through the logic circuit 1101, and the transceiver module 920 in FIG. 11 may be implemented through the interface 1102. The logic circuit 1101 may be a chip, a processing circuit, an integrated circuit, a system on chip (system on chip, SoC), or the like. The interface 1102 may be a communication interface, an input/output interface, or the like. In this embodiment of this application, the logic circuit and the interface may be coupled to each other. A specific manner of connection between the logic circuit and the interface is not limited in embodiments of this application.

In some embodiments of this application, the logic circuit and the interface may be configured to perform a function, an operation, or the like performed by the second UE.

In some embodiments of this application, the logic circuit and the interface may be configured to perform a function, an operation, or the like performed by the first UE.

In some embodiments of this application, the logic circuit and the interface may be configured to perform a function, an operation, or the like performed by the first network element.

In some embodiments of this application, the logic circuit and the interface may be configured to perform a function, an operation, or the like performed by the AMF.

In some embodiments of this application, the logic circuit and the interface may be configured to perform a function, an operation, or the like performed by the GMLC.

In some embodiments of this application, the logic circuit and the interface may be configured to perform a function, an operation, or the like performed by the LCS client.

This application further provides a computer-readable storage medium. The computer-readable storage medium stores a computer program or instructions. When the computer program or the instructions are run on a computer, the computer is enabled to perform the method in the foregoing embodiment. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. The computer may be a general-purpose computer, a dedicated computer, a computer network, or another programmable apparatus.

It should be noted that a person of ordinary skill in the art may see that all or a part of the steps of the methods in the foregoing embodiments may be implemented by a program instructing related hardware. The program may be stored in the computer-readable storage medium. The computer-readable storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically-erasable programmable read-only memory, (electrically-erasable programmable read-only memory, EEPROM), a compact disc read-only memory (compact disc read-only memory, CD-ROM) or another optical disk memory, a magnetic disk memory, a magnetic tape memory, or any other computer-readable medium that can be configured to carry or store data.

This application further provides a computer program product. The computer program product includes instructions or a computer program. When the instructions or the computer program is run on a computer, the method in the foregoing embodiment is performed. The computer program product includes one or more computer instructions. When the computer program instructions are loaded and executed on the computer, the procedures or functions according to embodiments of this application are all or partially generated.

All or some of the foregoing embodiments may be implemented by using software, hardware, firmware, or any combination thereof. When software is used to implement the embodiments, all or some of the embodiments may be implemented in a form of a computer program product.

This application further provides a communication system, including the second device and the first device. Optionally, the communication system further includes the third device.

Essentially, a part that makes contributions to a conventional technology, or all or some of the technical solutions of this application may be embodied in a form of a software product. The computer program product is stored in a storage medium, and includes several instructions to enable a device (which may be a terminal device, a network device, a vehicle-mounted device, a router, a server, a robot, a chip, a robot, or the like) to perform all or some of the steps of the methods described in embodiments of this application.

## Claims

1. A positioning method, wherein the method is applied to a second user equipment UE, and the method comprises:
receiving first positioning information, wherein the first positioning information is used to obtain coordinates of a first UE in a first coordinate system, and the first coordinate system is different from a geocentric coordinate system;
performing sidelink positioning measurement with the first UE to obtain a measurement result; and
sending second positioning information, wherein the second positioning information comprises the measurement result and coordinates of the second UE in the first coordinate system.

2. The method according to claim 1, wherein the first positioning information comprises first indication information, and the first indication information indicates that the second UE is a reference UE.

3. A positioning method, comprising:
sending first positioning information to a second UE, wherein the first positioning information is used to obtain coordinates of a first UE in a first coordinate system, and the first coordinate system is different from a geocentric coordinate system;
receiving second positioning information, wherein the second positioning information comprises coordinates of the second UE in the first coordinate system and a measurement result obtained by performing, by the second UE, sidelink positioning measurement with the first UE; and
determining the coordinates of the first UE in the first coordinate system based on the measurement result and the coordinates of the second UE in the first coordinate system.

4. The method according to claim 3, wherein the first positioning information comprises first indication information, and the first indication information indicates that the second UE is a reference UE.

5. The method according to claim 3 or 4, wherein the method further comprises:
receiving a first location request, wherein the first location request is used to obtain the coordinates of the first UE in the first coordinate system, the first location request comprises second indication information, and the second indication information indicates that the second UE is the reference UE.

6. The method according to claim 3 or 4, wherein the method further comprises:
receiving a first location request, wherein the first location request is used to obtain the coordinates of the first UE in the first coordinate system, and the first location request comprises identification information of the first coordinate system; and
using the second UE as a reference UE of the first UE based on the first location request, wherein the second UE is associated with the first coordinate system.

7. The method according to any one of claims 3 to 6, wherein the method further comprises:
sending a first location response, wherein the first location response comprises the coordinates of the first UE in the first coordinate system.

8. A positioning method, wherein the method is applied to a first UE, and the method comprises:
receiving third positioning information, wherein the third positioning information is used to obtain coordinates of the first UE in a first coordinate system;
using a second UE as a reference UE of the first UE based on the third positioning information, wherein the second UE is associated with the first coordinate system;
initiating sidelink positioning measurement to the second UE to obtain a measurement result; and
sending fourth positioning information, wherein the fourth positioning information comprises the measurement result and identification information of the second UE.

9. The method according to claim 8, wherein the third positioning information comprises identification information of the first coordinate system.

10. A positioning method, wherein the method comprises:
sending third positioning information to a first UE, wherein the third positioning information is used to obtain coordinates of the first UE in a first coordinate system, and the first coordinate system is different from a geocentric coordinate system;
receiving fourth positioning information, wherein the fourth positioning information comprises identification information of a second UE and a measurement result obtained by performing, by the first UE, sidelink positioning measurement on the second UE;
sending fifth positioning information to the second UE based on the fourth positioning information, wherein the fifth positioning information is used to obtain coordinates of the second UE in the first coordinate system;
receiving sixth positioning information from the second UE, wherein the sixth positioning information comprises the coordinates of the second UE in the first coordinate system; and
obtaining the coordinates of the first UE in the first coordinate system based on the measurement result and the coordinates of the second UE in the first coordinate system.

11. The method according to claim 10, wherein the third positioning information comprises identification information of the first coordinate system.

12. The method according to claim 10 or 11, wherein the method further comprises:
sending a first location response, wherein the first location response comprises the coordinates of the first UE in the first coordinate system.

13. A positioning method, wherein the method comprises:
sending a first location request, wherein the first location request is used to obtain coordinates of a first UE in a first coordinate system, the first coordinate system is different from a geocentric coordinate system, the first location request comprises second indication information, and the second indication information indicates that a second UE is used as a reference UE of the first UE; and
receiving a first location response, wherein the first location response comprises the coordinates of the first UE in the first coordinate system.

14. A communication apparatus, wherein the communication apparatus is comprised in a second UE, and the communication apparatus comprises:
a transceiver module, configured to receive first positioning information, wherein the first positioning information is used to obtain coordinates of a first UE in a first coordinate system, and the first coordinate system is different from a geocentric coordinate system; and
a processing module, configured to perform sidelink positioning measurement with the first UE to obtain a measurement result, wherein
the transceiver module is further configured to send second positioning information, wherein the second positioning information comprises the measurement result and coordinates of the second UE in the first coordinate system.

15. The method according to claim 14, wherein the first positioning information comprises first indication information, and the first indication information indicates that the second UE is a reference UE.

16. A communication apparatus, comprising:
a transceiver module, configured to send first positioning information to a second UE, wherein the first positioning information is used to obtain coordinates of a first UE in a first coordinate system, and the first coordinate system is different from a geocentric coordinate system, wherein
the transceiver module is further configured to receive second positioning information, wherein the second positioning information comprises coordinates of the second UE in the first coordinate system and a measurement result obtained by performing, by the second UE, sidelink positioning measurement with the first UE; and
a processing module, configured to determine the coordinates of the first UE in the first coordinate system based on the measurement result and the coordinates of the second UE in the first coordinate system.

17. The method according to claim 16, wherein the first positioning information comprises first indication information, and the first indication information indicates that the second UE is a reference UE.

18. The method according to claim 16 or 17, wherein
the transceiver module is further configured to receive a first location request, wherein the first location request is used to obtain the coordinates of the first UE in the first coordinate system, the first location request comprises second indication information, and the second indication information indicates that the second UE is the reference UE.

19. The method according to claim 16 or 17, wherein
the transceiver module is further configured to receive a first location request, wherein the first location request is used to obtain the coordinates of the first UE in the first coordinate system, and the first location request comprises identification information of the first coordinate system; and
the processing module is further configured to use the second UE as a reference UE of the first UE based on the first location request, wherein the second UE is associated with the first coordinate system.

20. The method according to any one of claims 16 to 19, wherein
the transceiver module is further configured to send a first location response, wherein the first location response comprises the coordinates of the first UE in the first coordinate system.

21. A communication apparatus, wherein the communication apparatus is comprised in a first UE, and the communication apparatus comprises:
a transceiver module, configured to receive third positioning information, wherein the third positioning information is used to obtain coordinates of the first UE in a first coordinate system; and
a processing module, configured to: use a second UE as a reference UE of the first UE based on the third positioning information, wherein the second UE is associated with the first coordinate system; and initiate sidelink positioning measurement to the second UE to obtain a measurement result, wherein
the transceiver module is further configured to send fourth positioning information, wherein the fourth positioning information comprises the measurement result and identification information of the second UE.

22. The method according to claim 21, wherein the third positioning information comprises identification information of the first coordinate system.

23. A communication apparatus, comprising:
a transceiver unit, configured to send third positioning information to a first UE, wherein the third positioning information is used to obtain coordinates of the first UE in a first coordinate system, and the first coordinate system is different from a geocentric coordinate system, wherein
the transceiver unit is further configured to receive fourth positioning information, wherein the fourth positioning information comprises identification information of a second UE and a measurement result obtained by performing, by the first UE, sidelink positioning measurement on the second UE;
the transceiver unit is further configured to send fifth positioning information to the second UE based on the fourth positioning information, wherein the fifth positioning information is used to obtain coordinates of the second UE in the first coordinate system; and
the transceiver unit is further configured to receive sixth positioning information from the second UE, wherein the sixth positioning information comprises the coordinates of the second UE in the first coordinate system; and
a processing module, configured to obtain the coordinates of the first UE in the first coordinate system based on the measurement result and the coordinates of the second UE in the first coordinate system.

24. The method according to claim 23, wherein the third positioning information comprises identification information of the first coordinate system.

25. The method according to claim 23 or 24, wherein
the transceiver module is further configured to send a first location response, wherein the first location response comprises the coordinates of the first UE in the first coordinate system.

26. A communication apparatus, comprising:
a processing module, configured to generate a first location request; and
a transceiver module, configured to send the first location request, wherein the first location request is used to obtain coordinates of a first UE in a first coordinate system, the first coordinate system is different from a geocentric coordinate system, the first location request comprises second indication information, and the second indication information indicates that a second UE is used as a reference UE of the first UE, wherein
the transceiver module is further configured to receive a first location response, wherein the first location response comprises the coordinates of the first UE in the first coordinate system.

27. A computer-readable storage medium, wherein the computer-readable storage medium stores a computer program, the computer program comprises program instructions, and when the program instructions are executed, a computer is enabled to perform the method according to claim 1 or 2, the method according to any one of claims 3 to 7, the method according to claim 8 or 9, the method according to any one of claims 10 to 12, or the method according to claim 13.

28. A communication apparatus, comprising a processor, wherein the processor is configured to execute instructions, so that the communication apparatus performs the method according to claim 1 or 2, the method according to any one of claims 3 to 7, the method according to claim 8 or 9, the method according to any one of claims 10 to 12, or the method according to claim 13.

29. The apparatus according to claim 28, wherein the apparatus further comprises a memory, and the memory is configured to store the instructions.

30. A chip, wherein the chip comprises a processor and a communication interface, and the processor reads, through the communication interface, instructions stored in a memory, to perform the method according to claim 1 or 2, the method according to any one of claims 3 to 7, the method according to claim 8 or 9, the method according to any one of claims 10 to 12, or the method according to claim 13.
